# EUROPEAN PATENT APPLICATION

(11) **EP 1 385 259 A2**
(43) Date of publication of application: **28.01.2004**
(21) Application number: 03078018.3
(22) Date of filing: 24.09.2003
(51) Int. Cl.: H02M 5/458, H02J 3/36

(54) **A system for high power drives**

(71) Applicant: ABB Technology AG, 8050 Zürich (CH)
(72) Inventor: Hyttinen, Mats, 771 43 Ludvika (SE); Ivarson, Claes, 72591 Västeraas (SE); Kjaer, Philip, 724 63 Västeraas (SE)
(74) Representative: Dahlstrand, Björn

(57) **Abstract**

A system for energy transfer between an ac network and a rotating mechanical equipment, comprising a dc link, a first Voltage Source Converter (VSC) for energy transfer between the ac network and the dc link, and an apparatus for energy transfer between the dc link and the rotating mechanical equipment.

## Description

### ABSTRACT

Europe's largest offshore gas platform is soon to be equipped with record-breaking variable-speed electric motor drives to assure a continued pressure to drive gas 70km from platform to land. An elegant solution employing two unique technologies allows HVDC power transmission and variable-speed motor drives to be combined. Voltage-source converters and electric machines operating at high voltage removes the need for voltage transformation - the high voltage used for power transmission can be fed directly to the machine. The solution moves the boundaries for variable-speed drive technology. It is described in some detail, but even permutations of the system topologies and choice of components are outlined.

### INTRODUCTION

### The Troll story

The Troll oil and gas field is located some 70 kilometres off the Norwegian west coast. Troll contains Europe's largest offshore natural gas reserves, and accounts for 50% of Norway's gas reserves and 1% of the world's known reserves. It was discovered in 1979, while production started in 1996 and is expected to continue beyond 2025 [1].

Among the many alternatives for extracting the Troll gas, a platform was chosen with modest processing on-board. Most processing takes place on land at Kollsnes.

The Troll A platform is 472 meters tall, and stands at a sea depth of over 300 meters. The platform deck measures around 100×100 meters and weighs over 20,000 tonnes. The concrete legs and skirts weigh around 1 million tonnes.

A number of drillings provide close to 100 million m3 gas per day. On the platform, water and light oil is removed from the well stream. The water returns to the sea, while the condensate (naphtha) is mixed with the gas again and piped to shore via two 36" pipelines. Glycol is added to the gas on the platform. Natural well pressure drives the gas & condensate to land, and will remain high enough until 2005 when platform boosting (precompression) will become necessary. At Kollsnes further processing is done, after which the gas is driven to Germany and the Netherlands by five 40MW compressors. These compressor drivers were supplied by ABB, and use load-commutated inverters (LCI) for variable-speed control of the 2-pole 60Hz synchronous motors [2].

### The precompression drivers

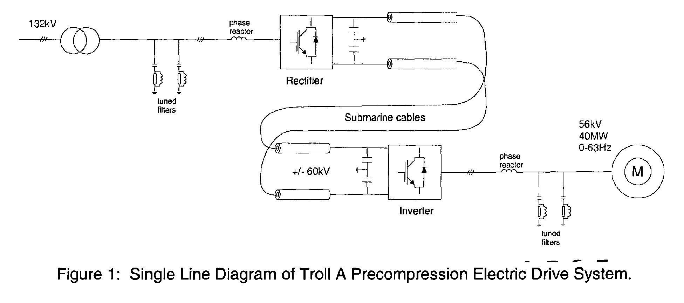

As the well pressure drops, boosting will be needed from 2005 and onwards to drive the gas from the platform to land. Gas turbines or electric motors were the alternatives considered as compressor drivers. For environmental, cost and accessibility reasons the electric drive system was chosen in the summer 2002. The electric power, towards 200MW when all drivers are installed, must be provided from land. This is possible with a submarine cable ac or dc transmission. Because the platform electrical load consists of a large variable-speed motor drive, various solutions for combining the transmission with the drive system were considered. The chosen solution makes use of two novel technologies, currently unique to ABB: HVDC Light™ and Motorformer™. The single line diagram is shown in Figure 1.

The elegance of this solution is apparent. Depending on how it is viewed it can be considered as:
(a) the back-to-back connection of two voltage-source converters between a grid and a motor adapted to include a power transmission as the dc-link, or
(b) an HVDC transmission where one of the grids has been replaced with a variable-frequency variable-voltage load.
The high-voltage converter and high-voltage machine allow a solution where the high voltage used for power transmission does not need to be stepped down via a transformer before fed to the machine.

### HVDC Light™

The advantages of dc transmission have been commercially exploited since 1954 when the first HVDC transmission was commissioned [3]. Mercury-arc valves were eventually replaced with high power thyristors and dc transmissions have reached several GW, over ±600kV, and distances around 1000 kilometres. In 1997, a new breed of HVDC converter stations and HVDC transmissions were introduced. ABB has named its product family HVDC Light™ [4].

The use of forced-commutated power semiconductors in a voltage-source converter allows much increased control of the active power flow, reactive power flow and harmonics when connected to even weak ac grids. This is well-known from low-voltage applications. The key factor allowing voltage-source converters to be connected to networks at voltage levels hitherto unreachable, is the series-connection of power transistors - in ABB's case IGBTs.

HVDC Light™ can be connected to underground/submarine cables or overhead lines, on the dc as well as the ac side. A significant difference between classic HVDC and HVDC Light™ is that in the latter, the dc-link voltage polarity is constant, irrespective of the direction of power flow.

### Motorformer™

In 1998, the Powerformer™ was introduced [5], doing away with the transformer between generator and grid. This was achieved by changing the stator winding to high-voltage cables rather than form-wound coils. AC electrical machines for MW applications are normally wound for supply voltages in the range 1-15 kV, employing Mica tape insulation systems [6]. But, in 2001 a 42kV 9MVA 4-pole synchronous motor was installed to start and drive a fixed-speed compressor: this type of high-voltage motor has been named the Motorformer™ by ABB [7].

In cable winding of a high-voltage machine, each turn in a stator slot is insulated for the full terminal voltage. The copper conductors form concentric layers, making up the innermost part of the cable. A thin semiconducting layer is placed around the copper strands. The XLPE insulation is then placed concentrically around it, followed by another semiconducting layer, which connects to the stator laminations within the slots. The stator slots must be shaped specifically for the cable diameter and the number of turns per slot. The cable winding allows needle-winding or other types of construction using one long cable per phase. Compared to conventional square conductor Mica-insulated stator coils, the term "turn-to-turn insulation" disappears for the Motorformer™. As each turn is insulated for the entire machine voltage, and furthermore well-attached to the stator within the slots, only in the end-windings will a cable turn outer layer show a non-zero voltage.

The stator size of a cable-wound machine increases somewhat from the larger amount of insulation material, and the machine construction changes, too. A larger machine will in many applications be compensated by the absence of a heavy and bulky transformer. The rotor construction needs not be any different to a machine wound for lower voltages.

### The Electric Drive System

The fully controllable rectifier on land governs the power flow from the ac grid into the dc-link, and thereby assures a stable and almost constant dc-link voltage. During faults in the ac grid on land, the rectifier can in certain cases continue operation unaffected. In other cases, it must interrupt operation.

The inverter on the platform must convert the dc voltage into an ac voltage of suitable frequency and amplitude for the motor. This is similar to the PWM technology used in many low-voltage variable-speed drives. An important difference is the amount of harmonics which the machine can tolerate from the converter. The phase reactor and tuned filters smoothen the square-wave voltage output from the HVDC Light™ inverter, because harmonics in the supply voltage to the Motorformer™ must be limited for two reasons:
(i) Any harmonics in the phase current will add to heating arising from increased copper losses and iron losses.
(ii) The stator winding insulation responds to high frequency components in the supply voltage (dv/dt). The insulation represents a capacitive leakage current path. These currents lead to losses in the return path and to non-zero voltage levels on the outside of the cables in the end-turns.

For similar reasons, certain low- and medium-voltage motor drives employing voltage-source converters are equipped with LC filters between the converter and motor. When realised with fixed frequency carrier-based PWM, HVDC Light™ employs a phase reactor between converter and ac grid (or motor), after which LC-filters are placed across the ac bus. The LC filters are tuned to the PWM switching frequency or multiples hereof. The ratings of the phase reactor and the filter capacitance are determined from the grid or motor requirements to the harmonics from the converter.

### Grounding of converter and machine

To keep the dc transmission cable voltage withstand level as low as possible, the two cables should be at the same voltage level, but of opposite polarity. The same reasoning covers the voltage-source converter: its dc-link should be grounded at its mid-point to keep a well defined and minimum insulation level.

If the machine winding star-point is not grounded, or if it is impedance-grounded, the zero-sequence currents can be kept small. As the stator core itself is grounded, the winding insulation level must be rated for the fundamental ac supply voltage *plus* any harmonics from the converter supply *plus* any dc offset there might be to the machine windings. In the solution outlined in Figure 1, the tuned filters remove most of the zero-sequence components from the converter output voltage, hence the machine star-point potential is kept close to ground.

### Brushless excitation

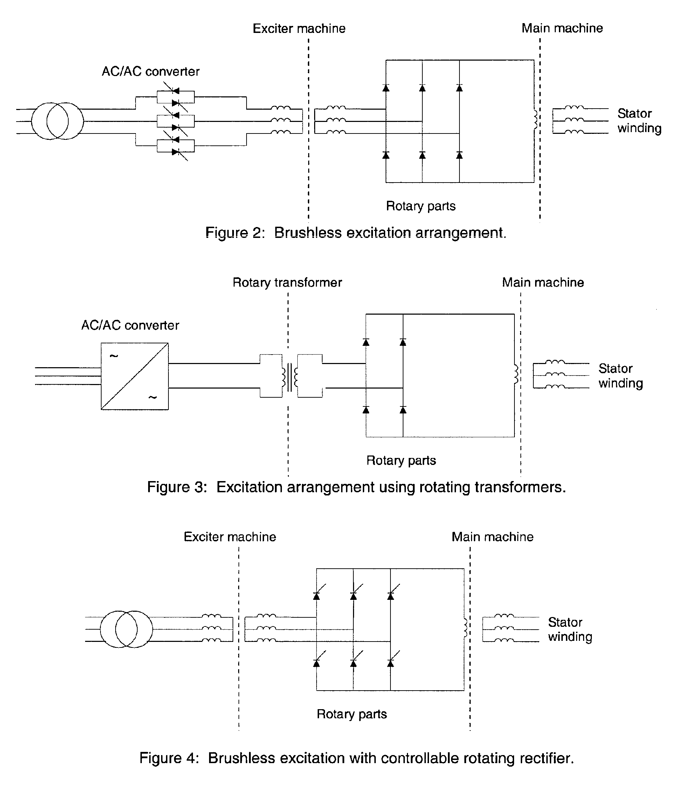

The rotor field winding in a synchronous machine can be supplied via brushes and slip-rings or via a brushless excitation arrangement. In many gas compressor applications, brushless excitation is a requirement. Such an arrangement is outlined in Figure 2. The excitation machine is a wound-rotor asynchronous machine. Its rotor circuit connects to the field winding via a diode rectifier, while its stator is fed from a thyristor converter. This ac/ac converter is an inexpensive way to realise a low-voltage ac/ac power conversion from fixed-frequency fixed-voltage supply into fixed-frequency variable-voltage. The excitation machine rating is in the order of 1% of the synchronous machine power rating. Even in a high-voltage motor, the brushless exciter voltage is unlikely to exceed 1kV.

It is useful to determine the field current for motor control purposes. This can be done either by direct measurement or estimation from other measurements. With brushless excitation, direct measurement of the field current requires some sort of contact-less transmission from the rotor to the stator. Otherwise, the excitation stator current and voltages can be used to compute an estimate of the field current.

Ideas for brushless excitation schemes based on rotating transformers are known. In this case there is no electromechanical energy conversion in the exciter - only electromagnetic (Figure 3). Ideas also exist for brushless exciters employing controllable rotating rectifiers. For example thyristor rectifiers where the firing signal command values are transmitted in a contactless manner (Figure 4).

### Control system

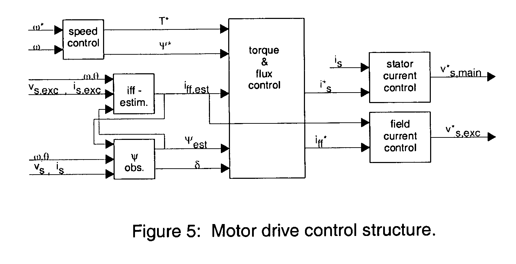

In a compressor driver application, the main control target is the rotational speed. Meanwhile, the motor is supplied electrically from three independent voltage sources: two on the stator winding and one on the rotor field winding. It is the role of the motor drive control to realise the desired rotation by means of these three supplies. This is implemented with a number of cascaded feedback loops (Figure 5):
(a) The motor speed controller will determine the torque demanded from the drive.
(b) The motor magnetic flux level is normally kept at the machines rated level up to a rotational speed where the converter dc-link voltage limit requires the motor flux level to be reduced.
(c) Motor flux can be estimated from measured quantities on stator and rotor, together with machine electrical parameters.
(d) A flux feedback controller and the torque demand are converted into set-points for the motor currents (two independent stator quantities and one on the rotor).
(e) The stator currents are controlled in a high bandwidth control loop, while the field winding current control loop has a lower bandwidth.

The three input signals to the control system are in this configuration:
- speed demand (motor torque)
- motor voltage level vs. speed (motor flux level)
- desired power factor at motor terminals
With these three inputs, the three independent currents (or voltages) can be specified and realised.

In the Troll Electric Drive System, brushless excitation is used. The field current and the stator flux is estimated making use of the following measured or computed quantities:
- exciter machine stator phase currents and voltages
- synchronous machine stator phase currents and voltages
- rotor position and angular velocity

The motor control is designed to be sufficiently robust such that the field current estimation can fail, without compromising the desired steady-state operating performance. Dynamic performance may be somewhat affected.

Operation in all 4 quadrants is possible, always with machine power factor very close to unity. The rotor position and angular speed is measured by means of rotor position sensors. Alternatively, the rotor position and angular speed can be estimated from other measured quantities, using so-called sensorless motor control algorithms.

In the case of a malfunction at the rectifier side of the dc transmission, power flowing from the grid into the dc-link will go to zero very quickly. Meanwhile, if the motor drive continues to extract power from the dc-link, the dc-link voltage will quickly decrease.
The rectifier will no longer be able to meet its closed-loop control objective of keeping the dc-link voltage constant. Eventually, an undervoltage protection will trip the drive system. To avoid this, a special ride-through feature is included in the machine control algorithm:

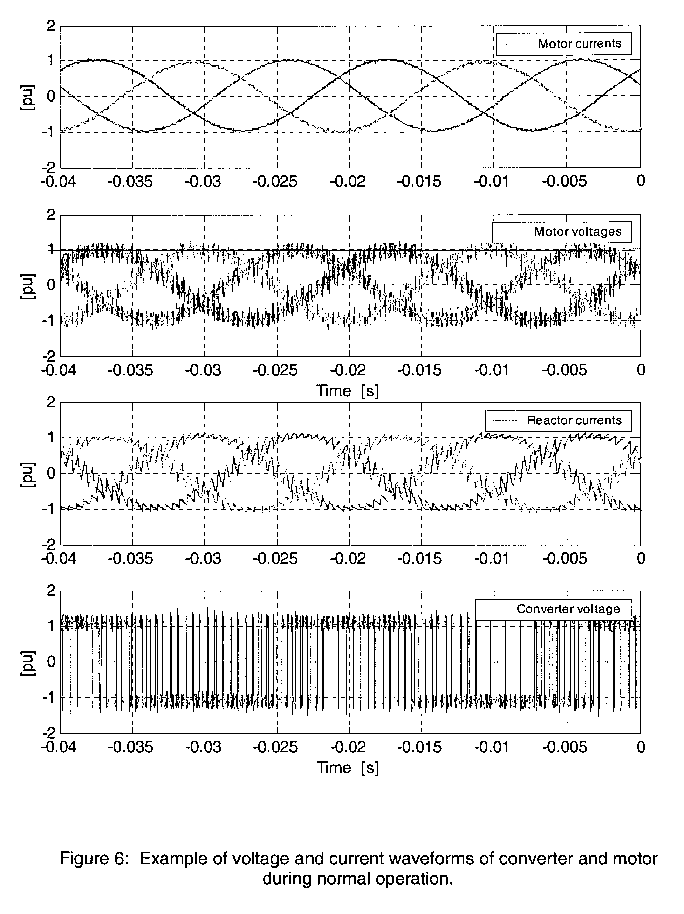

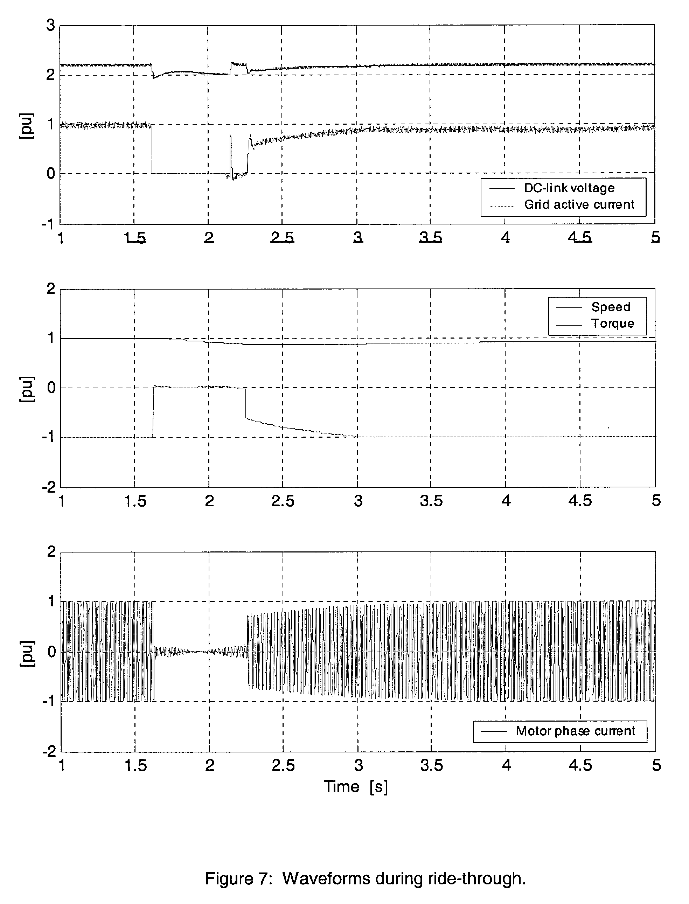

Upon detection of a low dc-link voltage, the normal machine control (speed, torque or power control) will be abandoned. Instead, a dc-link voltage control will determine the demanded motor torque. In other words, the machine will generate the power required to bring the dc-link voltage back to its normal level. Until the rectifier returns to normal operation, the kinetic energy of the motor and its load can feed power back into the dc-link. If the motor speed should drop below its minimum allowed level, the ride-through function must be abandoned and a full trip asserted. If the drive stays on-line, once the rectifier resumes operation, it will regain control over the dc-link voltage, feed power into the dc-link and the motor converter control detect this and can resume speed control operation, and start accelerating the motor back up to its reference speed. In a long dc transmission there may not be any fast communication between the rectifier station and the motor converter. In this case, only the dc-link voltage is sensed by the motor control system as a means for detecting disturbances in rectifier operation (Figure 6, Figure 7).

### MAIN CIRCUIT TOPOLOGIES

There are many permutations of the system shown in Figure 1. A number are described below, each with an accompanying text outlining its primary features.

### Applications and transmission distance

The high-voltage drive system and transmission outlined in Figure 1 is not a technical solution restricted to gas compressors. Most machine applications in the higher power region could be realised with similar technology: compressors, blowers, fans, mills, expanders, extruders, refiners, pumps, generators, marine propulsion, mobile pumping vessels. The particular industry and application will determine whether a high-voltage solution is economically attractive.

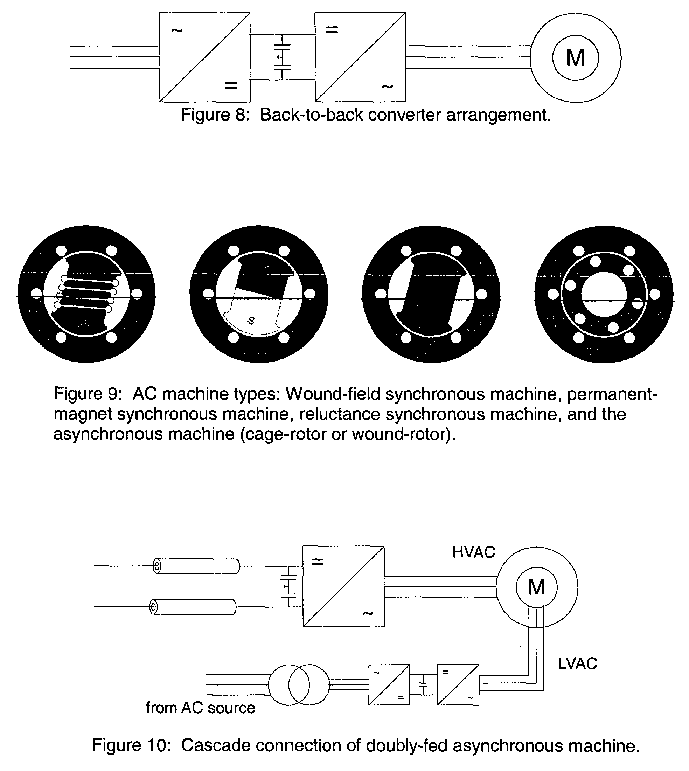

The length of the dc power transmission depends on the physical distance between source and load. Feeding offshore platforms without local generating capacity is one example. On-land applications could include feeding compressor stations along gas pipelines. If the machine application is near an ac grid, the dc transmission length may be reduced to almost zero, in a so-called back-to-back connection of the converters. This converter topology is well-known from drive systems where the line-side converter has regenerative capability ("active rectifier"). See Figure 8.

### Machine topologies and phase numbers, converter topologies

The Motorformer™ is a wound-field synchronous motor. The high-voltage stator winding could be used with essentially all types of ac rotating machines. Replacing the synchronous machine rotor field winding with permanent magnets would do away with the need for excitation equipment. This is used with advantage in variable-speed drives at lower voltage levels [8]. Machines without any rotor excitation source rely purely on reluctance for electromechanical energy conversion, but employ similar stator windings to other synchronous machines. Asynchronous machines using a cage rotor or a wound rotor are also applicable. In the latter case the rotor ac winding must be supplied by slip-rings and brushes or in a brushless manner. This low-voltage supply could be fixed-frequency or variable-frequency via a low-voltage converter. See Figure 9, Figure 10.

Any drive system will exhibit an optimum choice of machine voltage level for a given power level. Seeking an economical matching of converter-machine voltage and current levels may lead to different choices of converter and machine realisation.

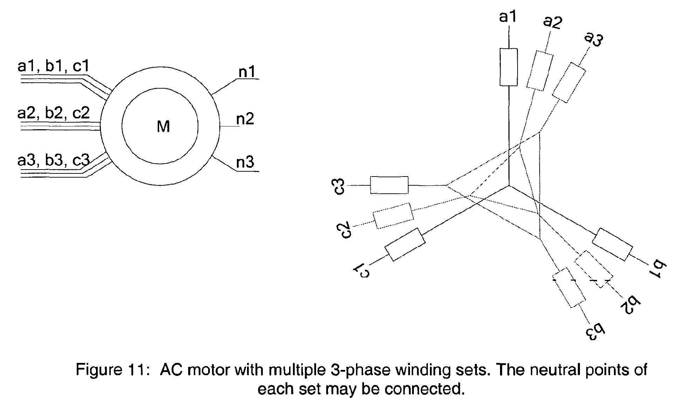

Multiple 3-phase winding sets: The Motorformer™ is currently realised with a 3-phase ac stator winding. 2×3-phase machines are used in variable-speed drives at lower voltage levels [9], and 3 or higher numbers of 3-phase winding sets can also be constructed. If star-connected winding sets are used, the star-points may be connected to each other or left isolated. See Figure 11.

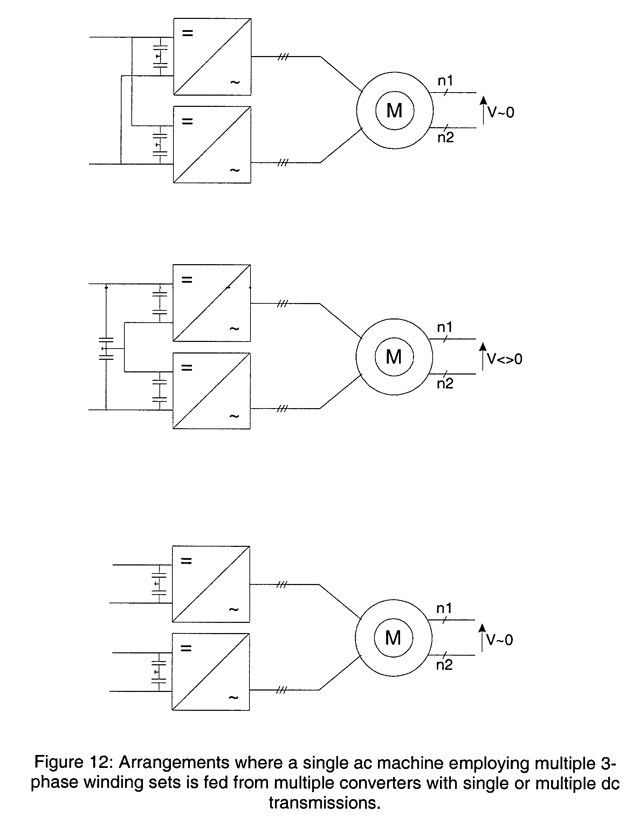

Multiple converter supplies: Each set of 3-phase windings can be fed from a converter. If multiple converters are used, these may be connected at the dc-link or fed from separate dc-links. If each converter has its dc-link midpoint connected to the same potential, each 3-phase winding set star-point will experience approximately equal potentials and no significant dc voltage offset will be present between winding sets. However, if the different converters have dc-link midpoints with large potential differences, the 3-phase winding sets will experience this as dc voltage offsets between the respective winding set star-points. This will increase the winding insulation requirements. Such an arrangement could be overcome by means of a multi-winding transformer, if judged economical.
Multiple winding sets fed from independent converters (with independent dc transmissions) could be a way to increase redundancy: for example, in a 2×3-phase machine the machine could run on a single 3-phase winding, albeit at half power, if one converter should fail. See Figure 12.

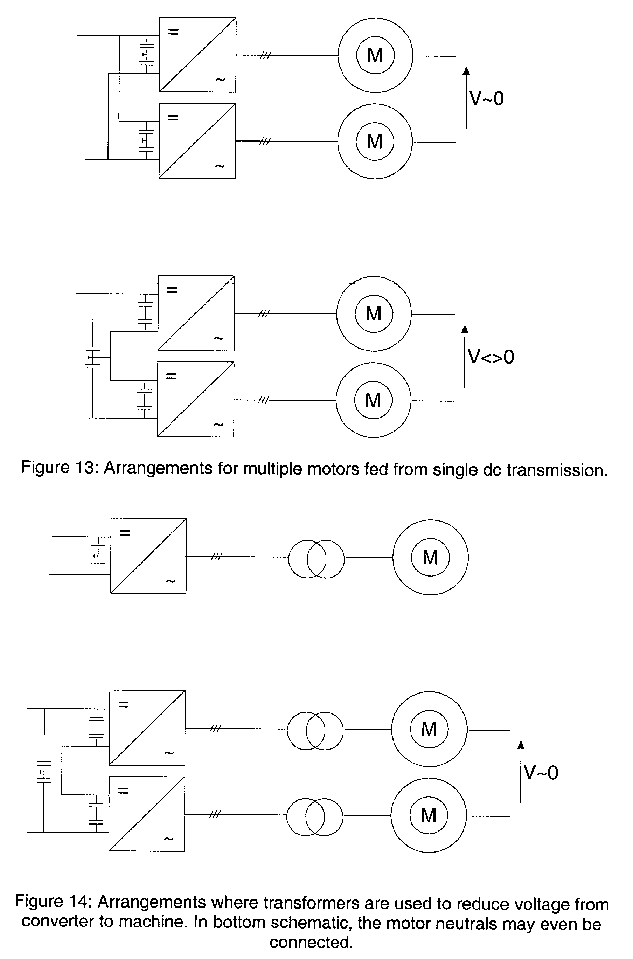

Multiple machines from common dc transmission: It is possible to realise multiple converter-machine connections, where the converters are connected to the same dc-link. In such a way, a single dc power transmission can feed multiple motor drives. The motor-converter sets can have their dc-links connected in parallel or in series. In the latter case, each converter and motor will experience a dc voltage offset which increases the insulation requirements. For increased redundancy, multiple systems outlined in Figure 1 can be paralleled, providing a number of independent transmissions and drive systems. See Figure 13.

Converter topologies: HVDC Light™ converters today are of the 2- and 3-level hard-switched type, but could well in the future employ soft-switching [10] and/or higher numbers of levels in the output voltage than 3. Higher numbers of voltage levels reduces the need for filtering of the output voltage [11].

Transformer arrangements: If the motor voltage level is not matched to the converter, a transformer may be inserted between motor and converter. A transformer could also be employed to spare the motor from any dc offsets in the converter supply voltage.
See Figure 14.

### References

[1] Bjørn Vidar Lerøen: "Troll gas for generations" ISBN 82-993930-1-9, A/S Norske Shell & Statoil.
[2] Tom-Christian Stensholt: "Design and manufacturing requirements. Transformer, motor and converter", Tutorial T1, European Conference on Power Electronics 1997, Trondheim, Norway.
[4] "Industriminnen" ISBN 91-630-9817-2, Graphium Västra Aros, 2000.
[4] www.abb.com/hvdc
[5] www.alstompower.com
[6] www.abb.com → Products & Services → Motors & Drives → Synchronous Motors → AMS, GBA
[7] www.abb.com → Products & Services → Motors & Drives → Motorformer
[8] www.abb.com → Products & Services → Motors & Drives → Synchronous Motors → AMZ
[9] www.abb.com → Products & Services → Motors & Drives → AC Drives → LCl Products
[10] M.D.Bellar et al: "A review of soft-switched dc-ac converters", IEEE Transactions on Industry Applications, Vol.34, No.4, 1998.
[11] IEEE Transactions on Industrial Electronics, Vol.49, No.5, 2002.
[12] N. Hörle, K. Eriksson, A. Mäland, T. Nestli:
   "Electrical supply for offshore installations made possible by use for VSC technology", Cigre 2002, Paris, France, August 2002.
[13] U.S. Patent 5901053.
   "Plant for transmitting electric power to remote facilities which have an electric motor as load"
[14] www.statoil.com → News & topics → News → 26.06.2002 "Powering Troll with new technology"
   www.shell.no → Shell på norsk sokkel → Troll Gass utbyggningen
[15] www.abb.com → Press releases → Group press releases 2002 → 2002-06-26 "ABB signs $230 million in contracts with Statoil"
[16] www.abb.com/hvdc → HVDC References → North America → "Cross Sound Cable - an energy bridge to Long Island"

## Claims

1. System for energy transfer between an ac network and a rotating mechanical equipment, comprising a dc link, a first Voltage Source Converter (VSC) for energy transfer between the ac network and the dc link, and an apparatus for energy transfer between the dc link and the rotating mechanical equipment, **characterized in that** the apparatus comprises a first machine unit containing a first high power rotating electric machine connected to the rotating mechanical equipment, a converter unit containing a second VSC connected to the rotating electric machine, and a control unit containing a computer for voltage and frequency control of the rotating electric machine.

2. System according to claim 1, wherein, the energy transfer apparatus is located in a remote location.

3. System according to claim 2, wherein the first VSC is located in the remote location and connected to the converter unit in a back to back arrangement.

4. System according to any of the preceding claims, wherein the converter unit comprises a third VSC, and wherein the second VSC and the third VSC are both connected to the first machine unit.

5. System according to any one of claim 1-3, wherein the converter unit comprises a third VSC and the machine unit comprises a second rotating electric machine, and wherein the first rotating electric machine is connected to the second VSC and the second rotating electric machine is connected to the third VSC.

6. System according to any one of claims 4 and 5, wherein the second VSC and the third VSC are connected in parallel.

7. System according to any one of claims 4 and 5, wherein the second VSC and the third VSC are connected in series

8. System according to any of the preceding claims, wherein the machine unit comprises a high voltage, cable wound electric machine.

9. System according to any one of claims 1-7, wherein the machine unit comprises a transformer and a medium voltage rotating electric machine.

10. System according to any of the preceding claims, wherein the rotating electric machine comprises a brushless excitation arrangement

11. System according to any of the preceding claims, wherein the control unit comprises means for determine the torque demands from the drive, means for estimating the motor flux from measured quantities on the stator and the rotor, and means for estimating and controlling the power factor at the motor terminals.

12. Method for providing an electric energy transfer between an ac network and a rotating high power mechanical equipment at a remote location, comprising the ac being rectified to a dc, the dc being inverted to an ac of variable frequency, and the variable ac being fed to a high power rotating electric machine, which is connected to the rotating mechanical equipment, **characterized in that** the dc to ac conversion is performed at the remote location, that the rotating electric machine is voltage and frequency controlled, and that the rotating electric machine is supplied electrically from three independent voltage sources.

13. Method according to claim 12, wherein the torque demand from the drive is determined, the motor flux level is estimated from measured quantities on stator and rotor together with machine electrical parameters, the torque demand is converted into set points for the motor currents, and that the stator currents are controlled with a high bandwidth in a current control - loop.

14. Use of a system according to claim 1-11 or a method according to claim 12 or 13 for driving a compressor at an off-shore installation.

15. Computer program product stored on a computer useable medium comprising instructions for a computer to evaluate the method of claim 12 to 13.

16. Computer program product according to claim 15 provided at least in part over a network, such as the Internet.
